(19) Europäisches Patentamt
European Patent Office
Office européen des brevets

(11) EP 0 801 896 B1

(12) **EUROPEAN PATENT SPECIFICATION**

(45) Date of publication and mention of the grant of the patent:
**30.08.2000 Bulletin 2000/35**

(51) Int Cl.⁷: **A01N 43/36**

(21) Application number: **97302575.2**

(22) Date of filing: **15.04.1997**

(54) **Use of arylpyrroles for the control of pyrothroid-resistant insect populations**

Verwendung von Arylpyrrolen zur Bekämpfung von pyrethroidresistenten Insektenpopulationen

Utilisation d'aylpyrroles pour contrôler les populations d'insectes résistantes aux pyréthroides

(84) Designated Contracting States:
**AT BE CH DE DK ES FI FR GB GR IE IT LI LU NL PT SE**

(30) Priority: **19.04.1996 US 635143**

(43) Date of publication of application:
**22.10.1997 Bulletin 1997/43**

(73) Proprietor: **American Cyanamid Company**
**Madison, New Jersey 07940-0874 (US)**

(72) Inventors:
- **Sheppard, David Craig**
  **Tifton, Georgia 31794 (US)**
- **Heaney, Kathleen**
  **New Jersey 08520 (US)**
- **Doscher, Mary Ehlers**
  **Trenton, New Jersey 08690 (US)**

(74) Representative: **Mannion, Sally Kim, Dr. et al**
**c/o Wyeth Laboratories,**
**Huntercombe Lane South,**
**Taplow**
**Maidenhead, Berkshire SL6 0PH (GB)**

(56) References cited:
- **"The Pesticide Manual" 1994 , BRITISH CROP PROTECTION COUNCIL XP002034019 Tenth Edition * page 7 - page 8 ***
- **PESTICIDE SCIENCE, vol. 40, 1994, pages 239-243, XP002034017 THOMAS ET AL.: "Activity of two novel insecticides against permethrin-resistant Pseudoplusia includens"**
- **BIOLOGICAL ABSTRACTS, vol. 93, Philadelphia, PA, US; abstract no. 244027, XP002034018 & 205TH ACS NATIONAL MEETING, DENVER, MARCH 28-APRIL 2, 1993. ABSTR PAP AM CHEM SOC, vol. 205, 1993, pages 1-2, BROWN ET AL.: "Negative correlation of resistance between cypermethrin and AC303630 in HELIOTHIS-VRESCENS"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 801 896 B1

## Description

Virtually all commercial and most companion animals are affected by parasites. The outcome associated with parasitism in said animals is generally clinical disease and subclinical conditions that decrease performance. Insects, such as *Diptera* (flies)and *Phthiraptera* (lice), are among the most economically important parasites in animal production. Insects, such as *Siphonáptera* (fleas) are highly pestiferous to companion animals. Many insects, such as *Haematobia irritans (Diptera: Muscidae),* require only 1-4 weeks to complete a life cycle during periods of warm temperatures. In Southern climates, as many as 20 generations of insects may develop annually. This rapidity of regeneration enables insect populations to develop resistance to environmental toxins such as insecticides.

Although, numerous insecticides may control insects effectively, most require frequent application. As a result, the efficacy of the insecticides may be severely compromised by the development of resistant populations such as pyrethroid-resistant insects. Thus, a new group of insecticides with selective toxicity against pyrethroid-resistant insects would be most advantageous.

Therefore, it is an object of this invention to provide a unique and highly effective group of arylpyrrole compounds useful for the control of pyrethroid-resistant insects of animals.

It is another object of this invention to provide a method to enhance the protection of animals from the infestation of pyrethroid-resistant insects.

## SUMMARY OF THE INVENTION

The present invention provides a method for the control of pyrethroid-resistant insects which comprises contacting said insects, their habitat, breeding area or food supply with a toxic amount of an arylpyrrole compound of formula I

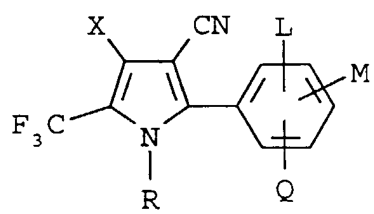

(I)

wherein

R is hydrogen or $C_1$-$C_4$alkoxymethyl;
X is Cl or Br, and
L, M, and Q are each independently hydrogen, Cl, Br, I, F or $C_1$-$C_4$haloalkyl.

Also provided is a method for the enhanced protection of animals from the infestation of pyrethroid-resistant insects which comprises administering or applying to the animals an effective amount of a formula I arylpyrrole compound.

## DETAILED DESCRIPTION OF THE INVENTION

Resistance is a widespread phenomenon and resistant populations of nearly all economically important pests can now be found. Insects highly resistant to pyrethroid insecticides pose a serious problem to animal health worldwide. Animal production and animal performance is greatly compromised by pyrethroid-resistant strains of insects, particularly of the orders *Diptera* (flies) and *Phthiraptera* (lice). Further, pyrethroid-resistant strains of *Siphonáptera* (fleas) can be a source of persistant annoyance to companion animals, as well as vectors of disease or intermediate hosts of certain tapeworms.

Resistance is herein defined as: a heritable reduction in the sensitivity of an insect population to the action of a pesticide, the reduction being expressed as a decrease in the frequency of individual insects affected by exposure to the pesticide (in comparison to the frequency observed in the same population upon initial or prior exposure).

A broad spectrum of arylpyrrole compounds are known to be useful for the control of endo- and ectoparasites

on warm-blooded mammals (U.S. Patent 5,455,263). However, it has now been found that the specific subset of arylpyrroles of formula I

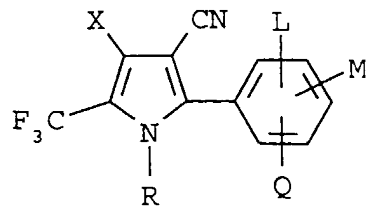

(I)

wherein

R is hydrogen or $C_1$-$C_4$alkoxymethyl;
X is Cl or Br, and
L, M, and Q are each independently hydrogen, Cl, Br, I, F or $C_1$-$C_4$haloalkyl

is highly efficacious against pyrethroid-resistant insects. Surprisingly, the formula I arylpyrroles are about 700%-1,100% more effective against pyrethroid-resistant insects than they are against pyrethroid-susceptible insects.

Important agronomic and companion animals such as cattle, sheep, horses, pigs, goats, water buffalo, deer, cats, dogs, rabbits, and the like are prone to attack and infestation by biting and sucking insects such as *Diptera, Phthiraptera* and *Siphonáptera.* In particular, *Dip*tera: *Muscidae* such as *Musca autumnalis* (face flies), *Haematobia irritans* (horn flies), *Stomoxys calcitrans* (stable flies), heel flies, tsetse flies and the like are breeders of filth and vectors of disease and are serious pests of animals such as cattle, horses and sheep. Further, *Diptera: Hippoboscidae* (louse flies) such as *Melophagus ovinus* (sheep ked), which is a serious parasite of sheep are problematic in animal production.

Among the *Phthiraptera* families known to be parasites of animals are: *Trichodectidae* such as *Bovicola bovis* (important cattle-biting louse) or *B. equi* (horsebiting louse); *Haematopinidae* such as *Haematopinus suis* (hog louse), or *H. asini* (horse sucking louse); *Linognathidae* such as *Linognathus stenopsis* (goat sucking louse) or *L. vitali* (long-nosed cattle louse); and the like.

One of the *Siphonáptera* families known to infest companion animals is *Pulicìnae* such as *Archaeopsyllìnae* (cat and dog fleas), *Spilopsyllìnae* (rabbit fleas), and the like.

Resistant insect populations may be detected and monitored readily by traditional methods such as bioassays or biochemical assays or by molecular techniques. Traditional bioassays, such as those described by Sheppard and Hinkle in J. Agric. Entomol. 4(1): 87-89 (1987), are able to detect the overall level of resistance present in a population in a single test.

Pyrethroid-resistant insects, particularly of the orders of *Diptera, Phthiraptera, or Siphonáptera*, more particularly of the families mentioned hereinabove, and most particularly of the species mentioned hereinabove may be effectively controlled by contacting said insects, their habitat, breeding area or food supply with a toxic amount of a formula I arylpyrrole compound. Preferred arylpyrrole compounds are those wherein X is Br and L, M and Q are each independently hydrogen or Cl. More preferred compounds are those wherein L and Q are hydrogen and M is 4-Chloro.

Among the formula I arylpyrrole compounds particularly useful in the method of the invention are:

4-bromo-2-(p-chlorophenyl)-1-(ethoxymethyl)-5-(trifluoromethyl)pyrrole-3-carbonitrile;
4-chloro-2-(p-chlorophenyl)-1-(ethoxymethyl)-5-(trifluoromethyl)pyrrole-3-carbonitrile;
4-bromo-2-(3,5-dichlorophenyl)-1-(ethoxymethyl)-5-(trifluoromethyl)pyrrole-3-carbonitrile;
4-bromo-2-(p-chlorophenyl)-5-(trifluoromethyl)pyrrole-3-carbonitrile;
4-chloro-2-(p-chlorophenyl)-5-(trifluoromethyl)pyrrole-3-carbonitrile;
4-bromo-2-(3,5-dichlorophenyl)-5-(trifluoromethyl)pyrrole-3-carbonitrile; and the like.

Protection of animals from the infestation of pyrethroid-resistant insects, particularly of the orders *Diptera, Phthiraptera* and *Siphonáptera*, may be enhanced by the application or administration of an effective amount of an arylpyrrole compound of formula I. In actual practice, the formula I compound may be applied to the animal as a dip, spray, pour-on, backrubber, oiler, dustbag, powder, lotion or the like; or as an ear-tag or collar; or as an oral drench, bolus, pill, implant, capsule, feed or drinking water additive or the like; or as a parenteral injection; or the like.

The effective amount of the formula I arylpyrrole compound to be used in the method of invention will vary according to the specific compound used, the mode of application used, the identity of the pyrethroid-resistant insect to be controlled, the degree of infestation, the extent of the pyrethroid-resistant insect population, the nature of the target host, the weather conditions and the like. Effective dosages may range from about 0.1 mg/kg to 100 mg/kg, preferably about 1.0 mg/kg to 30 mg/kg. Naturally, quantities of greater than effective amounts of the arylpyrrole compound may be administered, but are not required for protection of the target animal from the pyrethroid-resistant insects.

The formula I arylpyrrole compounds can be prepared by the methods disclosed in U. S. Patent No. 5,455,263.

In order to present a more clear understanding of the invention, the following specific examples are set forth below. These examples are merely illustrative and are not to be understood as limiting the scope and underlying principles of the invention in any way. Indeed, various modifications of the invention, in addition to those illustrated and described herein, will become apparent to persons skilled in the art from the following examples and the foregoing description. Such modifications are also intended to fall within the scope of the appended claims.

## EXAMPLE 1

### Evaluation Of The Effect Of Test Compounds vs. Cypermethrin On Susceptible And Resistant Strains Of Horn Flies *(Haematobia irritans).*

In this bioassay, highly pyrethroid-resistant wild flies and flies of a pyrethroid-susceptible lab strain are used. All flies are held in plastic petri dishes and exposed to sequential rates of test compound residue on filter paper[1]. A 1.25 inch hole is cut in the bottom half of the 100 mL petri dish and covered with fiberglass window screen. The bottom is used as the top in this bioassay, in order that the flies may be blood fed through the screened opening with a muslin pad saturated with citrated cattle blood.

The experiments are conducted in triplicate to determine 24 hour $LC_{50}$ data for the test compound and cypermethrin on susceptible and pyrethroid-resistant horn flies. The experiments are conducted on site so that freshly captured pyrethroid-resistant horn flies can be used. On the exemplified site, very high levels of pyrethroid resistance had been selected through several years of pyrethroid cattle ear tag use[2]. Wild pyrethroid-resistant horn flies are tested within 1 hour of capture to minimize check mortality. The resistance factor (RF) is determined by the following equation:

$$RF = \text{Resistant } LC_{50} \div \text{Susceptible } LC_{50}$$

The $LC_{50}$ is the concentration in $\mu g/cm^2$ of test compound required to kill 50% of the fly population tested. The $LC_{50}$ values are determined from the mortality data using standard log probit analysis techniques[3], and are within 95% confidence limits[1]. The data obtained is shown in Table I. The references listed below are incorporated herein by reference thereto.

Table I

| Exp.[4] | Test Compound | Susceptible $LC_{50}$ ($\mu g/cm^2$) | Resistant $LC_{50}$ ($\mu g/cm^2$) | RF |
|---|---|---|---|---|
| 1 | A | 1.2 | 0.356 | 0.30 |
| | B | 0.122 | 79.02 | 640 |
| 2 | A | 2.15 | 0.294 | 0.14 |
| | B | 0.057 | 65.20 | 1144 |
| 3 | A | 1.25 | 0.287 | 0.23 |
| | B | 0.013 | 47.27 | 3636 |

Compound A = 4-Bromo-2-(p-chlorophenyl)-1-(ethoxymethyl)-5-(trifluoromethyl)pyrrole-3-carbonitrile
Compound B = Cypermethrin
[4] Experiment

[1] Sheppard, D.C. and Hinkle, N.C., Journal Agricultural Entomology, 4, p. 87-89 (1987)
[2] Sheppard, D.C. and Joyce, J.A., Journal Economic Entomology, 85, p. 1587-1593 (1992)
[3] Daum, R.J., Bulletin of the Entomology Society of America, 16 (1): 10-12 (1970)

## EXAMPLE 2

### Evaluation Of Test Compounds vs. Permethrin On Susceptible And Resistant Strains Of Horn Flies (*Haematobia irritans*).

Using essentially the standard treated filterpapertarsal contact 24 hour bioassay described in Example 1, the following test compounds and pyrethroid insecticide are evaluated:

Compound A = 4-Bromo-2-(p-cholorophenyl)-1-(ethoxymethyl)-5-(trifluoromethyl)pyrrole-3-carbonitrile

Compound C = 4-Bromo-2-(p-chlorophenyl)-5-(trifluoromethyl)pyrrole-3-carbonitrile

Compound D = 4-Chloro-2-(p-chlorophenyl)-1-(ethoxymethyl)-5-(trifluoromethyl)pyrrole-3-carbonitrile

Compound E = Permethrin

The results are shown in Table II.

Table II

| Test Compound | Susceptible $LC_{50}$ ($\mu g/cm^2$) | Resistant $LC_{50}$ ($\mu g/cm^2$) | RF |
|---|---|---|---|
| A | 1.691 | 0.391 | 0.23 |
| C | 21.237 | 1.877 | 0.088 |
| D | 8.692 | 1.066 | 0.123 |
| E | 0.102 | 8.16 | 80.0 |

## EXAMPLE 3

### Evaluation Of Test Compound Activity Against Susceptible And Resistant Sheep Body Lice

In this evaluation, test compounds are dissolved in acetone and diluted in a gradient series. One mL aliquots of the acetone dilutions are pipetted onto 6 cm cotton squares. The treated squares are dried and put into 9 cm petri dishes. Adult lice from the pyrethroid-susceptible Peak Hill strain and the pyrethroid-resitant Rowena strain are collected by suction from sheep, transferred onto each treated square and confined using a stainless steel ring (50 mm diameter x 20 mm). After 16 hours, the lice are scored as dead, moribund or alive. In this bioassay, the test compound killed, rather than knocked-down lice. Each treatment is replicated. Standard log probit analysis techniques are used to determine the $LC_{50}$ and $LC_{99}$ values from the mortality data, and are within 95% confidence limits. The $LC_{50}$ values are then used to determine the resistance factor (RF) as shown below.

$$RF = \text{Resistant } LC_{50} \div \text{Susceptible } LC_{50}$$

The $LC_{50}$ is the concentration in mg/L of test compound required to kill 50% of the lice population tested. The $LC_{99}$ is the concentration in mg/L of test compound required to kill 99% of the lice population tested. The data are shown in Table III.

**Table III**

| Test Compound | Susceptible $LC_{50}$ (mg/L) | Resistant $LC_{50}$ (mg/L) | RF |
|---|---|---|---|
| 4-Bromo-2-(p-chlorophenyl)-1-(ethoxymethyl)-5-(trifluoromethyl-pyrrole-3-carbonitrile | 8.30 | 5.85 | 0.7048 |

| Test Compound | Susceptible $LC_{99}$ (mg/L) | Resistant $LC_{99}$ (mg/L) |
|---|---|---|
| 4-Bromo-2-(p-chlorophenyl)-1-(ethoxymethyl)-5-(trifluoromethyl-pyrrole-3-carbonitrile | 52.8 | 24.5 |

**Claims**

**1.** A method for the control of pyrethroid resistant insects of animals which comprises contacting said insects, their habitat, breeding area, or food supply with a toxic amount of an arylpyrrole compound of formula 1

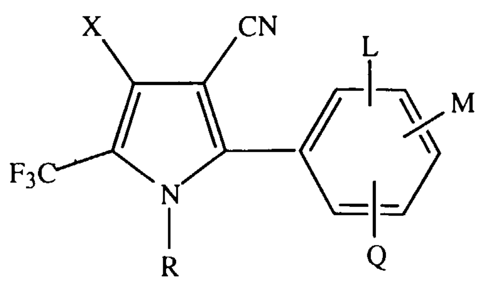

(I)

wherein

R is hydrogen or $C_1$-$C_4$ alkoxymethyl;
X is Cl or Br, and
L, M, and Q are each independently hydrogen, Cl, Br, I, F or $C_1$-$C_4$ haloalkyl.

**2.** A method for enhancing the medically non-prophylactic protection of animals from the infestation of pyrethroid-resistant insects which comprises administering or applying to the animals an effective amount of an arylpyrrole

compound of formula 1

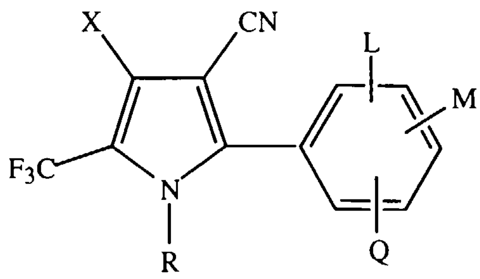

(I)

wherein

R is hydrogen or $C_1$-$C_4$ alkoxymethyl;
X is Cl or Br, and
L, M, and Q are each independently hydrogen, Cl, Br, I, F or $C_1$-$C_4$ haloalkyl.

**3.** The method according to claim 1 or 2 wherein the animals are cattle, sheep or buffalo.

**4.** The method according to claim 1 or 2 wherein the pyrethroid-resistant insects are *Diptera, Phthiraptera* or *Siphonáptera.*

**5.** The method according to claim 4 wherein the *Phthiraptera* is *Trichodectidae, Haematopinidae* or *Linognathidae;* one *Siphonáptera* is *Pulìcidae;* and the *Diptera* is *Muscidae* or *Hippoboscidae.*

**6.** The method according to claim 1 or 2 wherein R is ethoxymethyl.

**7.** The method according to claim 6 wherein the arylpyrrole compound is 4-bromo-2-(p-chlorophenyl)-1-(ethoxymethyl)-5-(trifluoromethyl)pyrrole-3-carbonitrile or 4-chloro-2-(p-chlorophenyl)-1-(ethoxymethyl)-5-(trifluoromethyl) pyrrole-3-carbonitrile.

**8.** The method according to claim 1 or 2 wherein R is hydrogen.

**9.** The method according to claim 8 wherein the arylpyrrole compound is 4-bromo-2-(p-chlorophenyl)-5-(trifluoromethyl)pyrrole-3-carbonitrile.

**10.** The method according to claim 1 or 2 wherein L and Q are each hydrogen and M is 4-chloro.

## Patentansprüche

**1.** Verfahren für die Bekämpfung von Pyrethroid-resistenten Insekten von Tieren, welches umfaßt: Kontaktieren von besagten Insekten, ihres Habitats, ihres Brutbereichs oder ihrer Nahrungsmittel zufuhr mit einer toxischen Menge einer Arylpyrrolverbindung der Formel I

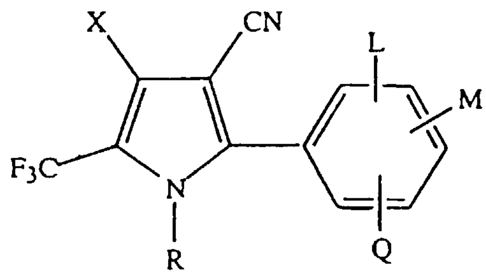

(I),

worin

R Wasserstoff oder $C_1$-$C_4$-Alkoxymethyl darstellt;
X für Cl oder Br steht und
L, M und Q jeweils unabhängig Wasserstoff, Cl, Br, I, F oder $C_1$-$C_4$-Halogenalkyl darstellen.

**2.** Verfahren zum Verbessern des medizinisch nicht prophylaktischen Schutzes von Tieren vor dem Befall von Pyrethroid-resistenten Insekten, welches umfaßt den Tieren eine wirksame Menge einer Arylpyrrolverbindung der Formel I verabzureichen oder aufzutragen,

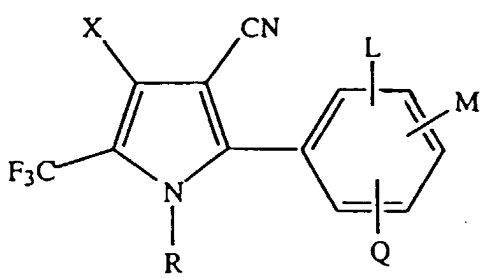

(I),

worin

R Wasserstoff oder $C_1$-$C_4$-Alkoxymethyl darstellt;
X für Cl oder Br steht und
L, M und Q jeweils unabhängig Wasserstoff, Cl, Br, I, F oder $C_1$-$C_4$-Halogenalkyl darstellen.

**3.** Verfahren gemäß Anspruch 1 oder 2, wobei die Tiere Rinder, Schafe oder Büffel sind.

**4.** Verfahren gemäß Anspruch 1 oder 2, wobei die Pyrethroid-resistenten Insekten *Diptera, Phthiraptera* oder *Siphonäptera* sind.

**5.** Verfahren gemäß Anspruch 4, wobei der *Phthiraptera Trichodectidae, Haematopinidae* oder *Linognathidae* ist; ein *Siphonáptera Pulìcidae* ist; und der *Diptera Muscidae* oder *Hippoboscidae* ist.

**6.** Verfahren gemäß Anspruch 1 oder 2, wobei R Ethoxymethyl darstellt.

**7.** Verfahren gemäß Anspruch 6, wobei die Arylpyrrolverbindung 4-Brom-2-(p-chlorphenyl)-1-(ethoxymethyl)-5-(trifluormethyl)-pyrrol-3-carbonitril oder 4-Chlor-2-(p-chlorphenyl)-1-(ethoxymethyl)-5-(trifluormethyl)pyrrol-3-carbonitril ist.

**8.** Verfahren gemäß Anspruch 1 oder 2, wobei R Wasserstoff darstellt.

**9.** Verfahren gemäß Anspruch 8, wobei die Arylpyrrolverbindung 4-Brom-2-(p-chlorphenyl)-5-(trifluormethyl)pyrrol-3-carbonitril ist.

**10.** Verfahren gemäß Anspruch 1 oder 2, wobei L und Q jeweils Wasserstoff darstellen und M für 4-Chlor steht.

**Revendications**

**1.** Procédé pour le contrôle d'insectes résistants aux pyréthroïdes des animaux qui comprend la mise en contact desdits insectes, de leur habitat, de leur aire de reproduction ou de leur stock de nourriture avec une quantité toxique d'un composé d'arylpyrrole de formule I

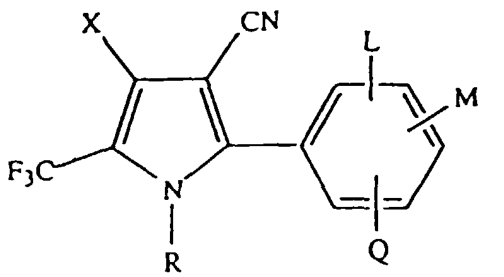

(I)

dans laquelle

R est un hydrogène ou un (alkoxy en $C_1$-$C_4$)méthyle ;
X est Cl ou Br, et
L, M et Q sont chacun indépendamment hydrogène, Cl, Br, I, F ou halo(alkyle en $C_1$-$C_4$).

**2.** Procédé pour augmenter la protection médicalement non prophylactique des animaux de l'infestation par des insectes résistants aux pyréthroïdes qui comprend l'administration ou l'application aux animaux d'une quantité efficace d'un composé d'arylpyrrole de formule I

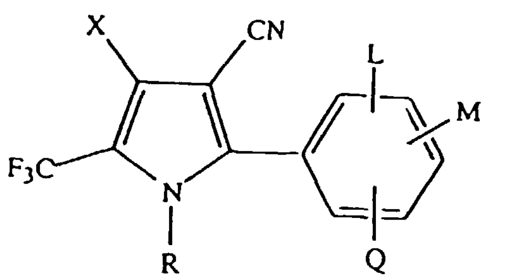

(I)

dans laquelle

R est un hydrogène ou un (alkoxy en $C_1$-$C_4$)méthyle ;
X est Cl ou Br, et
L, M et Q sont chacun indépendamment hydrogène, Cl, Br, I, F ou halo(alkyle en $C_1$-$C_4$).

**3.** Procédé selon la revendication 1 ou 2 dans lequel les animaux sont des bovins, des moutons ou des buffles.

**4.** Procédé selon la revendication 1 ou 2 dans lequel les insectes résistants aux pyréthroïdes sont *Diptera, Phthiraptera* ou *Siphonaptera.*

**5.** Procédé selon la revendication 4 dans lequel le *Phthiraptera* est *Trichodectidae, Haematopinidae* ou *Linognathidae ;* une *Siphonaptera* est *Pulicidae* et la *Diptera* est *Muscidae* ou *Hippoboscidae.*

**6.** Procédé selon la revendication 1 ou 2 dans lequel R est éthoxyméthyle.

7. Procédé selon la revendication 6 dans lequel le composé d'arylpyrrole est le 4-bromo-(2-(p-chlorophényl)-1-(éthoxyméthyl)-5-(trifluorométhyl)-pyrrole-3-carbonitrile ou le 4-chloro-(2-(p-chlorophényl)-1-(éthoxyméthyl)-5-(trifluorométhyl)-pyrrole-3-carbonitrile.

8. Procédé selon la revendication 1 ou 2 dans lequel R est hydrogène.

9. Procédé selon la revendication 8 dans lequel le composé d'arylpyrrole est le 4-bromo-(2-(p-chlorophényl)-5-(trifluorométhyl)-pyrrole-3-carbonitrile.

10. Procédé selon la revendication 1 ou 2 dans lequel L et Q sont chacun hydrogène et M est 4-chloro.